# EUROPÄISCHE PATENTSCHRIFT

(11) **EP 3 672 722 B1**
(45) Veröffentlichungstag und Bekanntmachung des Hinweises auf die Patenterteilung: **04.09.2024**
(21) Anmeldenummer: 17757735.0
(22) Anmeldetag: 21.08.2017
(51) Int. Cl.: B01J 20/26, B01J 20/28, C09K 3/32, B01F 23/235, B01F 25/433, B01F 25/452

(54) **ABSORPTIONSMITTEL UND EINE VORRICHTUNG ZUM HERSTELLEN EINES ABSORPTIONSMITTELS**
ABSORBENT AND DEVICE FOR PRODUCING AN ABSORBENT
PRODUIT ABSORBANT ET DISPOSITIF DESTINÉ À LA FABRICATION D'UN PRODUIT ABSORBANT

(43) Veröffentlichungstag der Anmeldung: 01.07.2020
(73) Patentinhaber: Otex AG, 8807 Freienbach (CH)
(72) Erfinder: MÄDER, Alexandre, 8834 Schindellegi (CH)
(74) Vertreter: Troesch Scheidegger Werner AG
(86) Internationale Anmeldenummer: PCT/EP2017/071035
(87) Internationale Veröffentlichungsnummer: WO 2019/037831

(56) Entgegenhaltungen:
- EP-A1- 0 634 430
- US-A- 3 209 554

## Beschreibung

Die vorliegende Erfindung betrifft ein Absorptionsmittel zum Binden einer Flüssigkeit und eine Vorrichtung zum Herstellen eines Absorptionsmittels.

In einer Welt, in der der Bedarf an fossilen Brennstoffen kontinuierlich steigt, stehen die Förderung und auch der Transporte von Rohöl und dergleichen weiterhin an der Tagesordnung. Leider birgt beides inhärent das nicht zu vernachlässigende Risiko einer Ölverschmutzung oder gar Ölpest. Eine solche Verunreinigung der Umwelt in mehr oder weniger grossem Ausmass betrifft Wasser und Land gleichermassen, sei es durch Havarien von Öltankern, durch Unfälle von Tanklastern, oder gar durch Grossereignisse wie die Explosion auf der Ölplattform "Deep Water Horizon" im Golf von Mexiko 2010. Die Auswirkungen auf die Umwelt sind beträchtlich; Ökosysteme werden gravierend gestört, Grundwasser wird verseucht, ganze Wirtschaftszweige, wie beispielsweise die Fischerei, können in den betroffenen Gebieten vollständig zum Erliegen kommen. Um diese Auswirkungen bei einem Unfall so gering wie möglich zu halten, ist schnelles Handeln angesagt. Einerseits gilt es ein weiteres Ausbreiten des Öls zu verhindern, andererseits müssen bereits kontaminierte Gebiete gereinigt werden. Was es hierfür braucht ist ein leistungsstarkes und umweltverträgliches Absorptionsmittel, welches zeitnah einsatzbereit ist und sich gut transportieren lässt.

Aus der EP 0 634 430 A1 ist ein Schaumstoff bekannt, welcher aus zwei Komponenten hergestellt wird, wobei die erste Komponente u.a. ein Harnstoff-Formaldehyd-Kondensat umfasst.

Aus der US 3 209 554 A ist eine Vorrichtung zur Herstellung eines Schaumes bekannt.

Die Aufgabe der vorliegenden Erfindung besteht darin, ein Absorptionsmittel bereitzustellen. Ein weiterer Aspekt besteht darin, ein 2-Komponenten-Absorptionsmittel bereitzustellen. Wiederum ein weiterer Aspekt besteht darin, eine Vorrichtung bereitzustellen, die das Herstellen des Absorptionsmittels ermöglicht. Ein zusätzlicher Aspekt besteht darin, ein Verfahren zum Absorbieren von Flüssigkeiten bereitzustellen.

Die Aufgabe wird gelöst durch ein Absorptionsmittel umfassend eine erste Komponente nach Anspruch 1 und eine zweite Komponente nach Anspruch 4.

Konkret handelt es sich bei der ersten Komponente nach Anspruch 1 um eine Komponente A, welche umfasst:
- Lösemittel, insbesondere anorganisches Lösemittel;
- Sulfonsäure;
- Anorganische Säure;
- Sulfaminsäure;
- Härter, insbesondere Arylsulfonsäure;
- Alkohol;
- Haftvermittler;
- Polyethylenglycol;
- Bisphenol.

In einer erfindungsgemässen Ausführungsform der Komponente A, welche mit jeder der noch zu nennenden Ausführungsformen kombiniert werden kann, sofern nicht im Widerspruch dazu, umfasst die Komponente A:
- Wasser als Lösemittel;
- Alkylbenzolsulfonsäure als Sulfonsäure;
- Phosphorsäure als anorganische Säure;
- Sulfaminsäure;
- Xylolsulfonsäure als Härter;
- Hexadecanol und/oder Octadecanol als einwertigen Alkohol;
- Resorcin als Haftvermittler;
- Polyethylenglycol 550 und/oder Polyethylenglycol 1000 als Polyethylenglycol;
- Butandiol, insbesondere 1.4 Butandiol, als zweiwertigen Alkohol, auch Dialkohol genannt;
- Bisphenol A als Bisphenol.

In einer erfindungsgemässen Ausführungsform der Komponente A, welche mit jeder der bereits genannten Ausführungsformen und mit jeder der noch zu nennenden Ausführungsformen kombiniert werden kann, sofern nicht im Widerspruch dazu, umfasst die Komponente A:
- 40-60%_{Masse} Lösemittel, insbesondere 48.2%_{Masse};
- 20-30%_{Masse} Sulfonsäure 65%ig, insbesondere 26.0%_{Masse};
- 1-12%_{Masse} anorganische Säure 75%ig, insbesondere 8.7%_{Masse};
- 1-6%_{Masse} Sulfaminsäure, insbesondere 3.1%_{Masse};
- 1-5%_{Masse} Härter; insbesondere 2.7%_{Masse};
- 1-5%_{Masse} einwertiger Alkohol, insbesondere 2.6%_{Masse};
- 1-5%_{Masse} Haftvermittler, insbesondere 2.4%_{Masse};
- 2-8%_{Masse} Polyethylenglycol; insbesondere 4.3%_{Masse};
- 0.5-5%_{Masse} zweiwertiger Alkohol, insbesondere 1.9%_{Masse};
- 0.01-1%_{Masse}Bisphenol; insbesondere 0.1%_{Masse}.

Ein Aspekt der Erfindung betrifft das Bereitstellen eines Verfahrens zur Herstellung der Komponente A. Das Verfahren, welches mit jeder der bereits genannten Ausführungsformen und mit jeder der noch zu nennenden Ausführungsformen kombiniert werden kann, sofern nicht im Widerspruch dazu, umfasst die Schritte:
a) Erwärmen des Lösemittels;
b) Zugeben der Sulfaminsäure und der Sulfonsäure;
c) Mischen;
d) Zugeben von Alkohol, insbesondere von einwertigem Alkohol;
e) Rühren;
f) Zugeben des Polyethylenglycols;
g) Mischen;
h) Lösen des Bisphenols;
i) Zugeben des gelösten Bisphenols, des Härters, des Haftvermittlers und der anorganischen Säure;
j) Mischen.

Das Lösemittel wird dabei beispielsweise auf 60°C erwärmt. Der Schritt e) des Rührens kann z.B. für ca. 15-30 min ausgeführt werden. Zum Ausführen des Schrittes h), des Lösens des Bisphenols, kann beispielsweise ein Dialkohol verwendet werden, sprich das Bisphenol kann in Dialkohol gelöst werden und würde dann für Schritt i) als in Dialkohol gelöstes Bisphenol vorliegen. Als Dialkohol kann beispielsweise Butandiol, insbesondere 1.4 Butandiol, verwendet werden.

Konkret handelt es sich bei der zweiten Komponente nach Anspruch 4 um eine Komponente B, welche umfasst:
- Lösemittel, insbesondere anorganisches Lösemittel;
- Harnstoff-Formaldehyd-Kondensat;
- Alditol;
- Diamid;
- Polyvinylpyrrolidon.

In einer erfindungsgemässen Ausführungsform der Komponente B, welche mit jeder der noch zu nennenden Ausführungsformen kombiniert werden kann, sofern nicht im Widerspruch dazu, umfasst die Komponente B:
- Wasser als Lösemittel;
- Basopor^{®}293 als Harnstoff-Formaldehyd-Kondensat;
- Sorbitol als Alditol;
- Harnstoff als Diamid;
- Polyvinylpyrrolidon K-90 als Polyvinylpyrrolidon.

Basopor^{®}293 ist ein von der Firma BASF vertriebenes wasserlösliches Kondensationsprodukt auf der Basis von Harnstoff und Formaldehyd.

In einer erfindungsgemässen Ausführungsform der Komponente B, welche mit jeder der bereits genannten Ausführungsformen und mit jeder der noch zu nennenden Ausführungsformen kombiniert werden kann, sofern nicht im Widerspruch dazu, umfasst die Komponente B:
- 35-55%_{Masse} Lösemittel, insbesondere 46.6%_{Masse};
- 30-40%_{Masse} Harnstoff-Formaldehyd-Kondensat, insbesondere 34.3%_{Masse};
- 5-15%_{Masse} Alditol 70%ig, insbesondere 11.5%_{Masse};
- 5-10%_{Masse} Diamid, insbesondere 7.35%_{Masse};
- 0.01-3%_{Masse} Polyvinylpyrrolidon, insbesondere 0.25%_{Masse}.

Ein Aspekt der Erfindung betrifft das Bereitstellen eines Verfahrens zur Herstellung der Komponente B. Das Verfahren, welches mit jeder der bereits genannten Ausführungsformen und mit jeder der noch zu nennenden Ausführungsformen kombiniert werden kann, sofern nicht im Widerspruch dazu, umfasst die Schritte:
a) Mischen des Lösemittels, des Harnstoff-Formaldehyd-Kondensats, des Alditols und des Diamids;
b) Rühren;
c) Zugeben des Polyvinylpyrrolidons;
d) Rühren.

Das Rühren des Schrittes b) kann beispielsweise für 2 h erfolgen, dass Rühren des Schrittes d) beispielweise für 4 h.

In Tabelle 1 ist eine Übersicht mit je drei Ausführungsbeispielen (Ausführungsbeispiel 1, 2 und 3) für die Komponente A und für die Komponente B gezeigt. Die Mengenangaben der einzelnen Inhaltsstoffe sind in Massenprozent ausgedrückt. Selbstverständlich können die Massenangaben der einzelnen Inhaltsstoffe der einzelnen Ausführungsbeispiele zu weiteren Ausführungsbeispielen kombiniert werden.

**Tabelle 1: Ausführungsbeispiel 1 bis 3 für die Komponente A und die Komponente B.**

| **Komponente** | **Ausführungsbeispie l 1** | **Ausführungsbeispi el2** | **Ausführungsbeispi el3** |
|---|---|---|---|
| ***Komponente A*** | ***[%_{Masse}]*** | ***[%_{Masse}]*** | ***[%_{Masse}]*** |
| Lösemittel | 40-60 | 45-55 | 46-50 |
| Sulfonsäure | 20-30 | 23-29 | 24-28 |
| Anorganische Säure 75% | 1-12 | 7-10 | 8-9 |
| Sulfaminsäure | 1-6 | 2-4 | 2.5-3.5 |
| Arylsulfonsäure 65% | 1-5 | 2-4 | 2.2-3.2 |
| Einwertiger Alkohol | 1-5 | 2-3 | 2.3-2.9 |
| Diphenol | 1-5 | 2-3 | 2.1-2.7 |
| PEG | 2-8 | 3-6 | 4.0-4.6 |
| Dialkohol | 0.5-5 | 1-3 | 1.4-2.4 |
| Bisphenol | 0.01 - 1 | 0.1-0.5 | 0.05-0.15 |

| ***Komponente B*** | ***[%_{Masse}]*** | ***[%_{Masse}]*** | ***[%_{Masse}]*** |
|---|---|---|---|
| Lösemittel | 35-55 | 40-50 | 42-49 |
| Harnstoff-Formaldehyd-Kondensat | 30-40 | 32-37 | 33-35 |
| Alditol 70% | 5-15 | 9-13 | 11-12 |
| Harnstoff | 5-10 | 6-9 | 6.8-7.9 |
| PVP | 0.01-3 | 0.1-1 | 0.1-0.4 |

In Tabelle 2 ist eine weitere Übersicht mit je drei Ausführungsbeispielen (Ausführungsbeispiel 4, 5 und 6) für die Komponente A und für die Komponente B gezeigt. Die Mengenangaben der einzelnen Inhaltsstoffe sind in Massenprozent ausgedrückt. Selbstverständlich können die Massenangaben der einzelnen Inhaltsstoffe der einzelnen Ausführungsbeispiele zu weiteren Ausführungsbeispielen kombiniert werden. Dies gilt auch in Kombination mit den in Tabelle 1 dargestellten Ausführungsbeispielen 1 bis 3.

**Tabelle 2: Ausführungsbeispiel 4 bis 6 für die Komponente A und die Komponente B.**

| **Komponente** | **Ausführungsbeispie l 4** | **Ausführungsbeispi el5** | **Ausführungsbeispi el6** |
|---|---|---|---|
| ***Komponente A*** | ***[%_{Masse}]*** | ***[%_{Masse}]*** | ***[%_{Masse}]*** |
| Lösemittel | 47-49 | 48.15-48.24 | 48.16 |
| Sulfonsäure | 25-27 | 25.5-26.4 | 26.00 |
| Anorganische Säure 75% | 8.4-8.9 | 8.65-8.74 | 8.67 |
| Sulfaminsäure | 2.9-3.3 | 3.0.5-3.14 | 3.13 |
| Arylsulfonsäure 65% | 2.5-2.9 | 2.65-2.74 | 2.65 |
| Einwertiger Alkohol | 2.4-2.8 | 2.55-2.64 | 2.60 |
| Diphenol | 2.2-2.6 | 2.35-2.44 | 2.40 |
| PEG | 4.2-4.5 | 4.25-4.34 | 4.34 |
| Dialkohol | 1.7-2.1 | 1.85-1.94 | 1.93 |
| Bisphenol | 0.09-0.13 | 0.05-0.14 | 0.12 |

| ***Komponente B*** | ***[%_{Masse}]*** | ***[%_{Masse}]*** | ***[%_{Masse}]*** |
|---|---|---|---|
| Lösemittel | 44-47 | 46.55-46.64 | 46.611 |
| Harnstoff-Formaldehyd-Kondensat | 33.5-34.5 | 34.25-34.34 | 34.290 |
| Alditol 70% | 11.2-11.8 | 11.45-11.54 | 11.500 |
| Harnstoff | 7.2-7.5 | 7.345-7.354 | 7.353 |
| PVP | 0.2-0.3 | 0.245-0.254 | 0.246 |

Ein weiterer Aspekt der Erfindung betrifft das Bereitstellen eins Absorptionsmittels nach Anspruch 9.

Konkret handelt es sich bei diesem Absorptionsmittel um ein Mehr-Komponenten-Absorptionsmittel, welches eine Komponente A und eine Komponente B umfasst, und mit jeder der bereits genannten Ausführungsformen und mit jeder der noch zu nennenden Ausführungsformen kombiniert werden kann, sofern nicht im Widerspruch dazu.

Das Absorptionsmittel ist ein organischer und biologischabiotisch abbaubarer poröser Körper, hergestellt auf Aminoharzbasis. Es besitzt eine Dichte in der Grössenordnung von 10 kg/m³, insbesondere von 5 kg/m³ bis 30 kg/m³, beispielsweise von 10 kg/m³ bis 20 kg/m³. Die Beschaffenheit des Absorptionsmittels ermöglicht ein hochwirksames und wirtschaftliches Absorbieren von Ölen, wie beispielsweise Rohölen, sowie organische Lösungsmittel aller Art und viele andere Chemikalien. Substanzen, die ein spezifisches geringeres Eigengewicht als Wasser besitzen, können auf dem Wasser herausgefiltert und aufgenommen werden. Durch die grosse Oberfläche und hohe Kapillarität des Absorptionsmittels kann das 80-90-fache des Eigengewichts an Öl in unterschiedlicher Viskosität schnell aufgenommen werden. Dies entspricht ungefähr 80 Volumenprozent %_{Vol}. In den stabilen dreidimensionalen Zellstrukturen des Absorptionsmittels bleibt die gespeicherte Flüssigkeit, wie beispielsweise Öl, eingelagert zurück.

In einem weiteren Aspekt der Erfindung, welcher mit jeder der bereits genannten Ausführungsformen und mit jeder der noch zu nennenden Ausführungsformen kombiniert werden kann, sofern nicht im Widerspruch dazu, betrifft das Bereitstellen eins Verfahrens zur Herstellung eines Absorptionsmittels, welches die Schritte umfasst:
a) Mischen der Komponente A mit einem Gas zum Erzeugen eines Gemischs;
b) Aufschäumen des Gemischs durch abwechslungsweises Verdichten und Entspannen zum Erzeugen eines Schaums;
c) Mischen des Schaums mit der Komponente B zum Erzeugen eines weiteren Gemischs;
d) Trocknen des weiteren Gemischs.

In einer Ausführungsform des erfindungsgemässen Verfahren zur Herstellung des Absorptionsmittels, welches mit jeder der bereits genannten Ausführungsformen und mit jeder der noch zu nennenden Ausführungsformen kombiniert werden kann, sofern nicht im Widerspruch dazu, umfasst das Verfahren zusätzlich den Schritt:
e) Verdünnen der Komponente A mit Lösemittel, insbesondere im Verhältnis 1:13, vor dem Schritt a).

Das Lösemittel kann dabei z.B. Wasser sein. Die Komponente A wird zuerst als Konzentrat in einer Zusammensetzung, wie bspw. in den Ansprüchen 1 bis 3 und im bisherigen Teil der Beschreibung beschrieben, bereitgestellt und dann verdünnt, um eine Gebrauchslösung herzustellen. Diese Gebrauchslösung respektive verdünnte Komponente A wird dann mit Gas gemischt und aufgeschäumt, bevor sie mit der Komponente B, welche für gewöhnlich nicht verdünnt werden muss, vor der Anwendung vermischt wird. Zum Herstellen einer Gebrauchslösung der Komponente A können beispielsweise 8 Liter Komponente A mit 104 Litern Lösemittel verdünnt werden, um 112 Liter Gebrauchslösung zu erzeugen.

In einer erfindungsgemässen Ausführungsform des Verfahrens zur Herstellung des Absorptionsmittels, welches mit jeder der bereits genannten Ausführungsformen und mit jeder der noch zu nennenden Ausführungsformen kombiniert werden kann, sofern nicht im Widerspruch dazu, wird beim Schritt des Mischens der Komponente A mit dem Gas zum Erzeugen eines Gemischs ein Teil der Komponente A eingesetzt und beim Schritt des Mischens des Schaumes mit der Komponente B werden 14 bis 42, insbesondere 28 Teile der Komponente B eingesetzt.

Hierzu kann die Komponente A beispielsweise in zwei Schritten "verdünnt" werden. In einem ersten Schritt wird ein Teil Komponente A mit z.B. 13 Teilen Lösemittel vorverdünnt. Es entstehen 14 Teile Gebrauchslösung. In einem zweiten Schritt werden dann die 14 Teile Gebrauchslösung, welche einen Teil Komponente A enthalten, im Verhältnis 1:2, d.h. mit 28 Teilen, der reinen Komponente B vermengt, so dass das Absorptionsmittel am Schluss aus einem Teil der Komponente A und aus 28 Teilen der Komponente B besteht. Werden je ein Teil Gebrauchslösung und ein Teil Komponente B verwendet, so besteht das Absorptionsmittel am Schluss aus einem Teil der Komponente A und aus 14 Teilen der Komponente B. Werden je ein Teil Gebrauchslösung und drei Teile Komponente B verwendet, so besteht das Absorptionsmittel am Schluss aus einem Teil der Komponente A und aus 42 Teilen der Komponente B. Je nach Alterung der Komponenten, Temperatur, Luftfeuchtigkeit etc. kann es erforderlich sein, die Zusammensetzung des Absorptionsmittels individuell anzupassen. Beispielsweise durch stärkeres oder weniger starkes Vorverdünnen der Komponente A (z.B. im Bereich 1:10 bis 1:20) zum Erzeugen der Gebrauchslösung, und/oder durch Abändern der Menge an Komponente B in Bezug auf die eingesetzte Menge der Komponente A. Für noch nicht wesentlich gealterte Komponenten hat sich jedoch ein Verhältnis zwischen 1:26 und 1:30, insbesondere von 1:28 als sehr gut geeignet erwiesen.

Ein weiterer Aspekt der Erfindung betrifft das Bereitstellen einer Vorrichtung nach Anspruch 13.

Konkret handelt es sich bei dieser Vorrichtung um eine Vorrichtung zum Herstellen eines Absorptionsmittels, welche eine Vormischzone mit mindestens zwei Einlassöffnungen umfasst. Weiter umfasst die Vorrichtung eine an die Vormischzone angrenzende und mit dieser in Fluidverbindung stehende Schäumungszone, welche mehreren miteinander in Fluidverbindung stehende und mit mechanischen Partikeln gefüllte Kammern aufweist. Darüber hinaus umfasst die Vorrichtung eine an die Schäumungszone angrenzende und mit dieser in Fluidverbindung stehende Mischzone, welche in Fluidverbindung steht mit einem Zufuhrkanal und beabstandet von diesem eine Auslassöffnung aufweist. Die Füllmenge der einzelnen Kammern ist nicht gleich.

In einer erfindungsgemässen Ausführungsform der Vorrichtung, welche mit jeder der noch zu nennenden Ausführungsformen kombiniert werden kann, sofern nicht im Widerspruch dazu, steigt die Füllmenge der einzelnen Kammern von der an die Vormischzone angrenzenden Seite der Schäumungszone zu der an die Mischzone angrenzenden Seite der Schäumungszone.

Ein solcher Anstieg kann sukzessive sein, muss aber nicht. D.h., dass entweder jede nachfolgende Kammer eine grössere Füllmenge als die vorhergehende haben kann, oder aber dass die Füllmenge der ersten Kammer kleiner ist als die der letzten Kammer, dass aber bei den dazwischenliegenden Kammern nicht jede nachfolgende Kammer eine grössere Füllmenge als die vorhergehende haben muss, sondern die Füllmenge auch über mehrere Kammern stagnieren kann.

Ein weiterer Aspekt der Erfindung, welcher mit jeder der bereits genannten Ausführungsformen und mit jeder der noch zu nennenden Ausführungsformen kombiniert werden kann, sofern nicht im Widerspruch dazu, betrifft das Bereitstellen eines Absorptionsmittels, welches hergestellt ist durch ein Verfahren, welches die Schritte umfasst:
a) Mischen einer Komponente A mit einem Gas zum Erzeugen eines Gemischs;
b) Aufschäumen des Gemischs durch abwechslungsweises Verdichten und Entspannen zum Erzeugen eines Schaums;
c) Mischen des Schaums mit einer Komponente B zum Erzeugen eines weiteren Gemischs;
d) Trocknen des weiteren Gemischs.

Sowohl ein nach dem eben beschriebenen Verfahren hergestelltes Absorptionsmittel, wie auch ein aus einer Komponente A und einer Komponente B hergestelltes Absorptionsmittel können zum Absorbieren einer Flüssigkeit verwendet werden. Die Reaktionszeit beim Mischen des Schaums mit der Komponente B liegt beispielsweise zwischen 60 und 120 s, insbesondere bei 90 s. In der Trocknungsphase des Gemischs aus der Komponente B und dem Schaum, welche auch als Vorhärtephase bezeichnet werden kann, bildet sich eine offenporige Struktur, die zur Absorption von hydrophoben flüssigen Substanzen, wie beispielsweise Öl, geeignet ist. Übliche Trocken- bzw. Vorhärtezeiten liegen zwischen 6 und 8 h, können aber bspw. durch niedrige Temperaturen verlängert oder durch hohe Temperaturen verkürzt sein. Ein optionales Verkleinern des Absorptionsmittels im Anschluss an das Trocknen respektive Vorhärten vergrössert die Oberfläche des Absorptionsmittels und kann so dessen Wirkung verbessern.

Ein weiterer Aspekt der Erfindung, welcher mit jeder der bereits genannten Ausführungsformen und mit jeder der noch zu nennenden Ausführungsformen kombiniert werden kann, sofern nicht im Widerspruch dazu, betrifft das Bereitstellen eines Verfahrens nach Anspruch 17.

Konkret handelt es sich bei diesem Verfahren um ein Verfahren zum Absorbieren einer Flüssigkeit, welches die Schritte umfasst:
a) Aufstreuen eines Absorptionsmittels auf eine Flüssigkeitslache, insbesondere in zerkleinerter Form;
b) Warten;
c) Aufnehmen des mit der Flüssigkeit vollgesogenen Absorptionsmittels, insbesondere durch Abschöpfen oder Einsammeln.

Das Absorptionsmittel kann beispielsweise in zerkleinerter Form, sprich in Form von Schnitzeln, Pellets, Granulat oder Kügelchen, auf die zu entfernende Flüssigkeit gegeben werden, unabhängig davon, ob diese Flüssigkeit auf dem Wasser oder Land ausgetreten ist. Auf dem Wasser können bevorzugt Flüssigkeiten, die nicht gut mischbar sind mit Wasser und eine geringere Dichte aufweisen, aufgenommen werden. Das Absorptionsmittel saugt sich aufgrund seiner besonderen Porenstruktur nicht mit Wasser, sondern mit der ausgetretenen öligen Flüssigkeit voll. Das vollgesogene Absorptionsmittel schwimmt weiterhin auf dem Wasser und kann von der Wasseroberfläche geschöpft werden, während das Öl aufgrund der Grenzflächenspannung in den Kapillarräumen festgehalten wird. Ein Vorteil beim Einsammeln des vollgesogenen Absorptionsmittels ist die Tatsache, dass die Stabilität des Absorptionsmittels bei voller Sättigung im Wesentlichen erhalten bleibt. Die Beschaffenheit des Absorptionsmittels verleiht diesem oleophile, sprich ölanziehende Eigenschaften und gleichzeitig hydrophobe, sprich wasserabweisende, Eigenschaften. Folglich saugt das Absorptionsmittel beispielsweise bevorzugt Öl gegenüber Wasser. Eine Verstärkung des Wirkungseffekts kann erzielt werden, indem das Absorptionsmittel, welches beispielsweise in Schnitzeln vorliegt, weiter zerkleinert wird. Dies ist beispielsweise vorteilhaft bei der Applikation zu Land, beispielsweise auf dem Boden, wie bspw. auf einer Strasse. Generell muss das Einsammeln des vollgesogenen Absorptionsmittels nicht unmittelbar erfolgen, da das Absorptionsmittel resistent gegen sämtliche Kohlenwasserstofflösemittel ist.

Sind die Absorptionsmittelschnitzel nach einer Zeit vollgesogen, so können sie eingesammelt werden. Zu Wasser kann dies beispielsweise mithilfe von Sieben oder Netzen erfolgen. Eine zuvor gelegte Ölbarriere kann dazu verwendet werden, die Schnitzel enger zusammen zu treiben, um den Abschöpfprozess zu erleichtern. Zu Land können die Schnitzel beispielsweise mit einem Rechen zusammengekehrt werden und in einen geeigneten Behälter überführt werden.

Das eingesammelte, gesättigte Absorptionsmittel kann dann beispielsweise in einer Müllverbrennungsanlage beseitigt werden. Das Absorptionsmittel bietet den Vorteil, dass es bei der Verbrennung keine giftigen Gase freisetzt und kein FCKW enthält. Alternativ kann die aufgenommene Flüssigkeit durch Zentrifugation oder Pressen zurückgewonnen werden. Letzteres bietet sich eher bei grossen anfallenden Mengen an Öl an. Eine getrennte Entsorgung der Flüssigkeit und eine Wiederverwendung des Absorptionsmittels wären so ermöglicht, vorausgesetzt, die Struktur des Absorptionsmittels wurde durch die Rückgewinnung der aufgenommenen Flüssigkeit nicht wesentlich zerstört.

War bisher hauptsächlich von Öl, Rohöl und Lösungsmitteln die Rede, so sei gesagt, dass das Absorptionsmittel auch im Haushalt eingesetzt werden kann, beispielsweise zum Binden von Speiseöl, wie altem Frittierfett. Dieses kann dann problemlos über den Hausmüll entsorgt werden. Des Weiteren kann das Absorptionsmittel auch zum Beseitigen schlechter Gerüche im Müll eingesetzt werden. Zur Geruchsbeseitigung nimmt man am besten Absorptionsmittel-Flocken.

Weitere Einsatzgebiete bzw. generelle Einsatzgebiete des Absorptionsmittels sind:
- im Gewerbe (z.B.) bei industriellen Verfahren, Maschinen oder anderen Installationen, Schiffsbetrieb, Tankreinigung, Transport etc.
- bei Unfällen zu Land und Wasser
- bei ölverseuchter Erde zur Unterstützung von ölzerlegenden Mikroben; zur Sauerstoffzufuhr, als Beimischgut
- als Filtermasse zum Ausfiltern von Wasser, das verunreinigt ist durch Öle, Fette, Farben und sämtliche chlorierte und nicht chlorierte Kohlenwasserstoffe und andere Verunreinigungen
- zum Mitführen von Berufschauffeuren beim täglichen Umgang mit Gefahrgut-Transportern oder sonst im Strassenverkehr
- als Einsatzmittel durch Feuerwehr und Zivilschutzorganisationen, Umweltschutzbehörden usw.
- als Füller entstandener Hohlräume bei Explosionsgefahr, bei Unfällen mit Tankwagen, Zisternen etc., bei denen bei der Bergung Explosionsgefahr besteht, kann der Hohlraum an Ort vollgeschäumt werden
- für alle unkontrollierten Ölverschmutzungen zu Wasser und zwar nicht als blosse Ergänzung zu bestehenden Ölbekämpfungsmassnahmen, sondern als hauptflankierende Unterstützung, um die steigende Verschmutzung der Meere erfolgreich zu bekämpfen
- Anwendung generell bei jeder Ölverschmutzung.

Ausführungsbeispiele der vorliegenden Erfindung werden nachstehend anhand von Figuren noch näher erläutert. Es zeigen
Fig. 1 ein erfindungsgemässes Verfahren zur Herstellung einer Komponente A;
Fig. 2 ein erfindungsgemässes Verfahren zur Herstellung einer Komponente B;
Fig. 3 ein erfindungsgemässes Verfahren zur Herstellung eines Absorptionsmittels;
Fig. 4 ein Ausführungsbeispiel eines erfindungsgemässen Verfahrens zur Herstellung eines Absorptionsmittels;
Fig. 5 eine erfindungsgemässe Vorrichtung zur Herstellung eines Absorptionsmittels;
Fig. 6 ein Ausführungsbeispiel einer erfindungsgemässen Vorrichtung zur Herstellung eines Absorptionsmittels;
Fig. 7 ein weiteres Ausführungsbeispiel einer erfindungsgemässen Vorrichtung zur Herstellung eines Absorptionsmittels;
Fig. 8 ein weiteres Ausführungsbeispiel einer erfindungsgemässen Vorrichtung zur Herstellung eines Absorptionsmittels;
Fig. 9 ein erfindungsgemässes Verfahren zum Absorbieren einer Flüssigkeit.

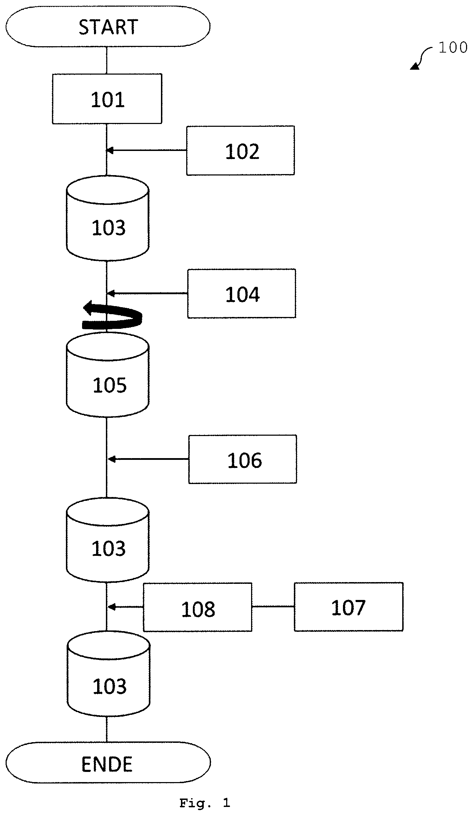

In Fig. 1 dargestellt ist ein Verfahren 100 zur Herstellung einer Komponente A. Das Verfahren beginnt mit dem Schritt des Erwärmens des Lösemittels 101 auf beispielsweise 50-70°C. Anschliessend erfolgt die Zugabe der Sulfaminsäure und der Sulfonsäure 102 und das Mischen 103. Nachfolgend wird Alkohol, insbesondere ein einwertiger Alkohol, zugegeben 104 und für beispielsweise mindestens 15 min gerührt 105. Danach wird das Polyethylenglycol zugegeben 106 und erneut gemischt 103. Parallel dazu oder im Anschluss kann dann das Bispehnol gelöst werden 107, beispielsweise in Alkohol, insbesondere in einem Dialkohol. Das gelöste Bisphenol wird dann, zusammen mit dem Härter, des Haftvermittlers und der anorganischen Säure zugegeben 108 und das Ganze wird erneut gemischt 103.

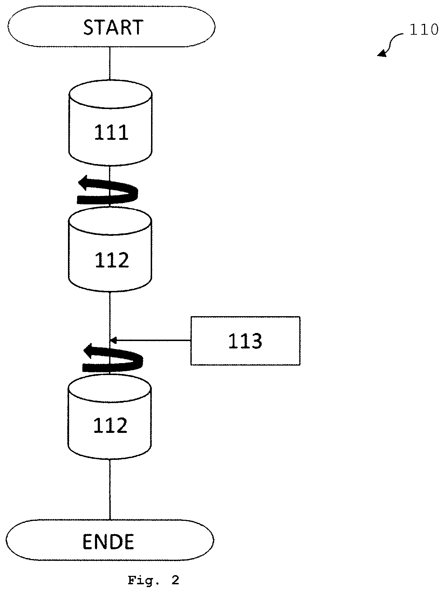

In Fig. 2 dargestellt ist ein Verfahren 110 zur Herstellung einer Komponente B. Das Verfahren beginnt mit dem Schritt des Mischens des Lösemittels, des Harnstoff-Formaldehyd-Kondensats, des Alditols und des Diamids 111. Anschliessend wird gerührt 112, für beispielsweise eine Dauer von 30 min bis 3 h, z.B. für 2 h. Dann erfolgt die Zugabe des Polyvinylpyrrolidons 113 und es wird erneut gerührt 112, für beispielsweise eine Dauer von 2 h bis 6 h, z.B. für 4 h.

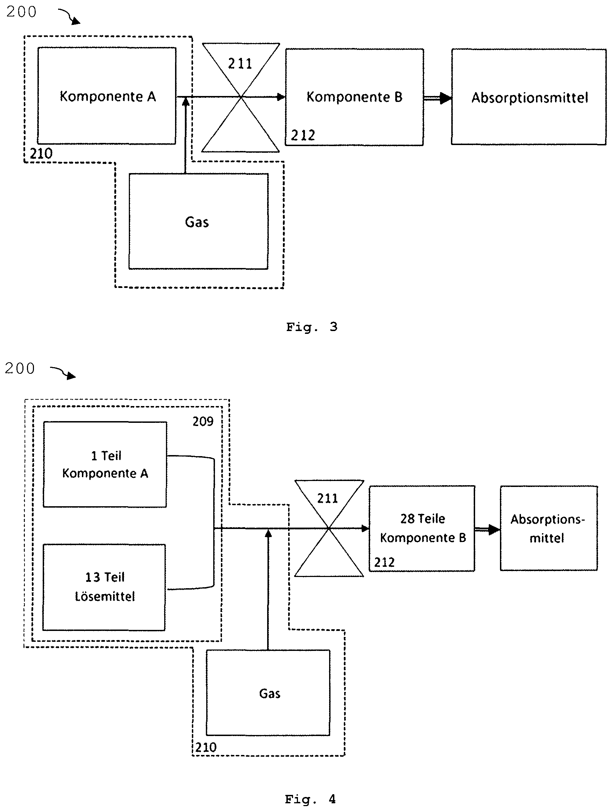

In Fig. 3 dargestellt ist ein Verfahren 200 zur Herstellung eines Absorptionsmittels aus der Komponente A und Komponente B. Im ersten Schritt wird die Komponente A gemischt mit einem Gas 210, beispielsweise Druckluft oder Stickstoff. Das in diesem Schritt erzeugte Gemisch wird daraufhin aufgeschäumt 211 durch abwechslungsweises Verdichten und Endspannen mit dem Ziel, einen Schaum zu generieren. Dieser Schaum wird dann wiederum mit der Komponente B gemischt 212. Die Komponente A ist also eine Art Schaummittel, wohingegen die Komponente B ein Harz ist. Das Schaummittel sorgt für Luftblasen und somit für Poren im Harz, welches polymerisiert. Während dem Trocknen bzw. Aushärten (nicht dargestellt) brechen die durch die Luftblasen gebildeten Poren auf, was das Absorptionsmittel offenporig und schwammartig werden lässt.

In Fig. 4 dargestellt ist eine Ausführungsform eines Verfahrens 200 zur Herstellung eines Absorptionsmittels aus der Komponente A und Komponente B. In diesem dargestellten Verfahren wird das Schaummittel, sprich die Komponente A, erst im Verhältnis 1:13 mit einem Lösemittel, wie beispielsweise Wasser, verdünnt 209, bevor die verdünnte Komponente A, sprich die Gebrauchslösung der Komponente A, mit dem Gas vermischt wird 210. Das Aufschäumen erfolgt durch sukzessives Verdichten und Entspannen des so entstandenen Gemischs 211. Verfestigt wird der Schaum anschliessend durch das Zugeben und Mischen 212 mit der Komponente B, sprich dem Harz. Wird beispielsweise 1 Teil Komponente A eingesetzt, so wird diese, im Falle einer 1:13 Verdünnung, mit dreizehn Teilen Lösemittel verdünnt. Zum Aushärten des aus diesem Gemisch resultierenden Schaums werden z.B. 28 Teile Komponente B zugegeben und vermengt 212.Das Mischungsverhältnis Komponente A:Lösemittel muss nicht zwingend 1:13 sein. Dieses Mischungsverhältnis kann beispielsweise auch zwischen 1:5 und 1:20, insbesondere zwischen 1:10 und 1:16 liegen. Selbiges gilt für das Verhältnis der Komponente A:Komponente B. im oben aufgeführten Beispiel ist dieses 1:28. Dieses Mischungsverhältnis kann beispielsweise auch zwischen 1:14 und 1:42, insbesondere zwischen 1:21 und 1:35 liegen.

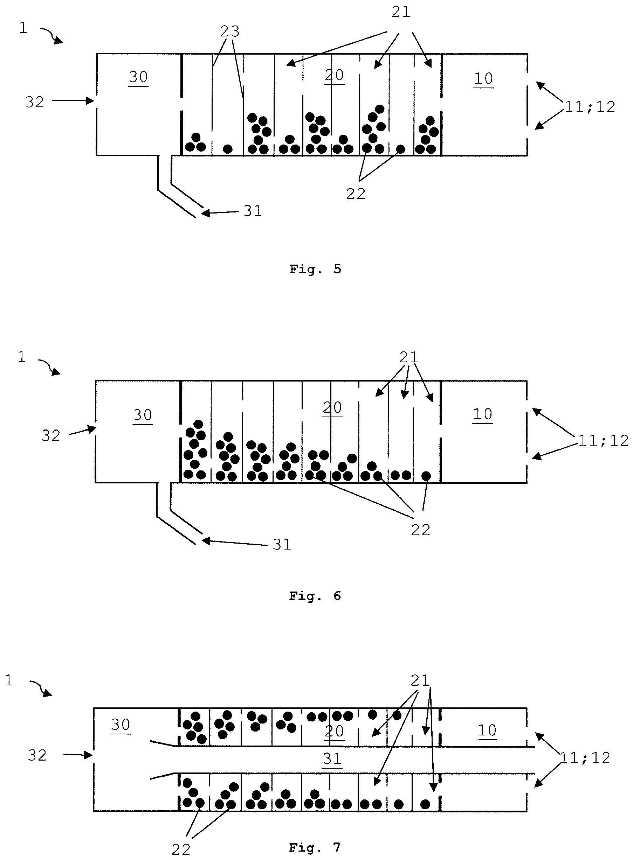

In Fig. 5 dargestellt ist ein Querschnitt einer Vorrichtung 1 zum Herstellen eines Absorptionsmittels. Die Vorrichtung 1 umfasst eine Vormischzone 10, welche mindestens zwei Öffnungen 11,12 aufweist. Durch eine dieser Öffnungen 11;12 kann die Komponente A bzw. die Gebrauchslösung der Komponente A in die Vormischzone 10 eingelassen werden, durch die andere Öffnung 12;11 kann ein Gas eingelassen werden. An die Vormischzone 10 grenzt eine Schäumungszone 20 an. Die Vormischzone 10 und die Schäumungszone 20 stehen miteinander in Fluidverbindung, sprich das aus Komponente A bzw. der Gebrauchslösung der Komponente A und dem Gas bestehende Gemisch kann von der Vormischzone 10 in die Schäumungszone 20 gelangen. Die Einlassöffnungen 11,12 der Vormischzone 10 sind beispielsweise beabstandet zur Schäumungszone 20 angeordnet. Das Gas und die Komponente A bzw. die Gebrauchslösung der Komponente A müssen nicht zwingenderweise nur durch je eine Öffnung 11;12 in die Vormischzone 10 eingelassen werden, sie können auch über mehrere Öffnungen oder gar eine Vielzahl an Öffnungen eingebracht werden. Die Schäumungszone 20 beinhaltet mehrere Kammern 21, welche wiederum mit mechanischen Partikeln 22, wie beispielsweise Glas-, Plastik-, Teflon- oder Keramikkügelchen, gefüllt sind. Die Anzahl der Kammern 21 kann beispielsweise zwischen drei und 30 liegen. Die Vorrichtung 1 in Fig. 5 weist neun Kammern 21 auf. Die benachbarten Kammern 21 stehen in Fluidverbindung. Die Anzahl bzw. die Füllmenge, z.B. in Gramm ausgedrückt, ist nicht für alle Kammern 21 identisch, manche Kammern sind mit mehr, andere Kammern mit weniger Partikeln 22 gefüllt. Es können beispielsweise einige Kammern 21 die identische Füllmenge aufweisen, die Füllmenge mindestens einer Kammer 21 muss sich jedoch von dieser Füllmenge unterscheiden. Auch muss die Grösse der einzelnen Kammern 21 nicht identisch sein, sondern kann variieren. Manche Kammern 21 können also grösser, respektive breiter sein, als andere Kammern 21. Die Fluidverbindung benachbarter Kammern 21 wird beispielsweise durch Öffnungen in den, die Kammer 21 trennenden Trennwänden 23 bereitgestellt. Die zu einer Kammer 21 gehörenden zwei Trennwände 23 weisen die Öffnungen bevorzugt nicht deckungsgleich und beabstandet voneinander auf. Sprich ist die eine Öffnung im oberen Bereich der Kammer 21 angeordnet, so ist die andere Öffnung eher im unteren Bereich der Kammer 21 angebracht. Das Gemisch wird aufgeschäumt, indem es von einer Kammer 21 in die nächste fliesst, sich dazwischen immer wieder durch die Öffnungen der Kammerwände 23 "quetscht" und sich dann wieder im Volumen der nächsten, ebenfalls an diese Trennwand 23 anschliessende Kammer 21 entspannt. Dieses abwechselnde Verdichten und Entspannen führt also zum Aufschäumen des Gemischs aus dem Gas und der Komponente A bzw. der Gebrauchslösung der Komponente A. Zusätzlich verbessert werden kann der Aufschäumvorgang in der Schäumungszone 20 durch die, sich in den Kammern 21 befindlichen mechanischen Partikeln 22. Durch deren Mengenverteilung auf die einzelnen Kammern 21 gesehen, kann die Schaumqualität respektive die Schaumkonsistenz beeinflusst werden. Zum Erhalt einer optimalen Schaumkonsistenz kann es auch zweckdienlich sein, die Gösse der die Fluidverbindung bildenden Öffnungen in den Trennwänden 23 und deren Position zu variieren. Beispielsweise können die Öffnungen der Trennwände 23 von jeder zweiten Trennwand 23 deckungsgleich sein. So kann eine spiralförmige Bewegung des Gemischs in der Schäumungszone 20 erreicht werden. An die Schäumungszone 20 angrenzend und mit dieser in Fluidverbindung stehend, befindet sich die Mischzone 30. Die Mischzone 30 grenzt beispielsweise derart an die Schäumungszone 20 an, dass sie beabstandet zur Vormischzone 10 oder gar auf der gegenüberliegenden Seite angeordnet ist. In die Mischzone 30 dringt einerseits der aufgeschäumte Schaum aus der Schäumungszone 20 ein und andererseits kann über einen Zufuhrkanal 31 die Komponente B darin eingeleitet werden. In der Mischzone 30 werden also die Komponente B und die mit Gas aufgeschäumte Komponente A bzw. der aufgeschäumten Gebrauchslösung der Komponente A vermengt und bilden dort das, noch feuchte Absorptionsmittel, welches über die Auslassöffnung 32 aus der Vorrichtung 1 austreten kann.

Die in Fig. 6 dargestellte Vorrichtungen 1, welche im Querschnitt gezeigt ist, unterscheidet sich im Wesentlichen durch die Füllmenge der einzelnen Kammern 21 in der Schäumungszone 20. Die Füllmenge steigt von der ersten bis hin zur letzten Kammer 21 nach und nach an. Sprich jede nachfolgende Kammer 21, von der Vormischzone 10 hin zur Mischzone 30 betrachtet, weist eine höhere Füllmenge auf als die vorhergehende Kammer 21.

Eine Vorrichtung mit acht Kammern kann beispielsweise wie folgt mit mechanischen Partikeln, insbesondere Glasperlen, gefüllt sein:

| | | | |
|---|---|---|---|
| Kammer 1: | 30 g | Kammer 5: | 70 g |
| Kammer 2: | 40 g | Kammer 6: | 80 g |
| Kammer 3: | 50 g | Kammer 7: | 90 g |
| Kammer 4: | 60 g | Kammer 8: | 100 g |

Ein sukzessiver Anstieg der Füllmenge ist jedoch nicht zwingend. Eine Vorrichtung mit acht Kammern kann beispielsweise auch wie folgt mit mechanischen Partikeln, insbesondere Glasperlen, gefüllt sein:

| | | | |
|---|---|---|---|
| Kammer 1: | 30 g | Kammer 5: | 60 g |
| Kammer 2: | 40 g | Kammer 6: | 80 g |
| Kammer 3: | 40 g | Kammer 7: | 100 g |
| Kammer 4: | 60 g | Kammer 8: | 120 g |

Ein weiteres Beispiel für eine Verteilung mechanischer Partikel, insbesondere Glasperlen, auf 8 Kammern wäre:

| | | | |
|---|---|---|---|
| Kammer 1: | 30 g | Kammer 5: | 60 g |
| Kammer 2: | 40 g | Kammer 6: | 80 g |
| Kammer 3: | 40 g | Kammer 7: | 90 g |
| Kammer 4: | 60 g | Kammer 8: | 90-120 g |

In Fig. 7 ist ein Querschnitt einer weiteren Ausführungsform der Vorrichtung 1 zum Herstellen eines Absorptionsmittels gezeigt. Diese Ausführungsform unterscheidet sich von den vorhergehenden insbesondere durch die Anordnung des Zufuhrkanals 31. Die Vormischzone 10, die Aufschäumzone 20 und die Mischzone 30 bilden gemeinsam einen zylindrischen Grundkörper. Der Zufuhrkanal 31 verläuft nun innerhalb der Vormischzone 10 und der Schäumungszone 20, steht aber nicht mit diesen in Fluidverbindung, und mündet in die Mischzone 30. Die Komponente A bzw. die Gebrauchslösung der Komponente A (z.B. über Öffnung 11), das Gas (z.B. über Öffnung 12) und die Komponente B (über Kanal 31), können in dieser Ausführungsform alle über eine Seite der Vorrichtung, nämlich über die Seite der Vormischzone 10, in die Vorrichtung 1 eingespeist werden. Der Zufuhrkanal 31 ist so ausgebildet, dass die letzten 1 cm bis 2 cm trichterförmig ausgebildet sind.

Die Komponente A, alias Schaummittel, bzw. die Gebrauchslösung der Komponente A, die Komponente B, alias Harz, und das Gas können in Tanks bereitgestellt werden und über Schläuche mit der Vorrichtung 1 über die Einlassöffnungen 11,12 und den Zufuhrkanal 31 verbunden werden. Die Schläuche können dabei eine Länge von mindestens 2 m, insbesondere von 3.5 m bis 5 m haben. Der Durchfluss der Komponente A bzw. der Gebrauchslösung der Komponente A, z.B. in einer 1:13 Verdünnung, wird beispielsweise so eingestellt, dass er ca. 1100 g/min bis 1330 g/min, insbesondere 1250 g/min bis 1330 g/min, beträgt. Der Durchfluss der Komponente B beträgt beispielsweise 2200 g/min bis 3500 g/min, insbesondere 3400 g/min bis 3500 g/min. Mit einer Dichte der Gebrauchslösung der Komponente A von bspw. ca. 1.0 kg/l und einer Dichte der Komponente B von bspw. ca. 1.25 kg/l resultiert auf das Volumen bezogen ein Verhältnis von ca. einem Teil Gebrauchslösung der Komponente A zu ca. 1.2 bis 2.6 Teilen der Komponente B, insbesondere von ca. einem Teil Gebrauchslösung der Komponente A zu ca. 2.0 bis 2.3 Teilen der Komponente B. In der Mischzone 30 verweilen die Komponenten A und B beispielsweise für eine Reaktivitätszeit von 60 s bis 120 s, insbesondere von 90 s. Anschliessend kann das noch feuchte Reaktionsprodukt, sprich das Absorptionsmittel für 4 h bis 10 h, insbesondere für 6 bis 8 h, getrocknet werden. Die Dichte des getrockneten Absorptionsmittels beträgt beispielsweise zwischen 14 kg/m³ und 18 kg/m³.

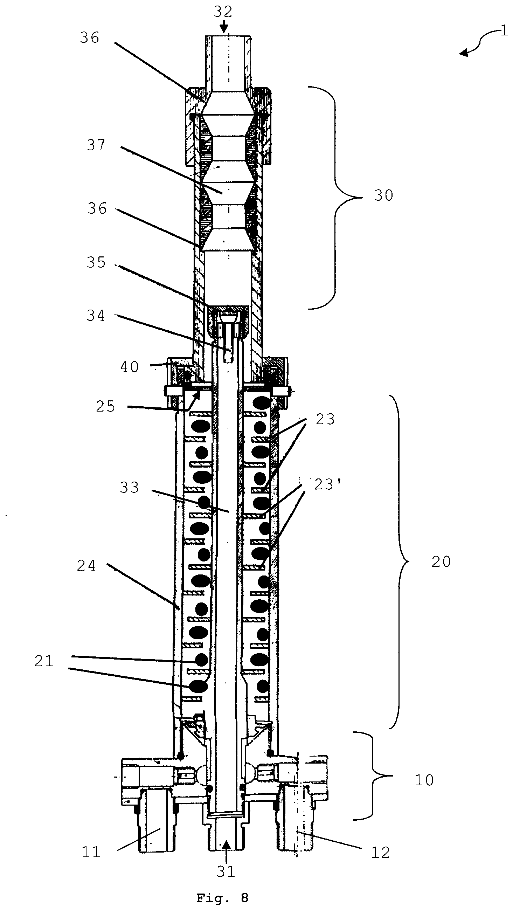

Die Fig. 8 zeigt einen Querschnitt durch eine weitere Ausführungsform einer Vorrichtung 1 zum Herstellen eines Absorptionsmittels. Angezeigt sind die Bereiche der Vormischzone 10, der Schäumungszone 20 und der Mischzone 30. Im Bereich der Mischzone 10 angeordnet sind die beiden Einlassöffnungen 11, 12 und der Zufuhrkanal 31. Die Schäumungszone umfasst mehrere Kammern 21, welche durch Trennwände 23, 23' voneinander getrennt sind und gefüllt sind mit mechanischen Partikeln 21 zu unterschiedlichen Füllmengen. Der Zufuhrkanal 31 läuft durch die Vormischzone 10 und die Schäumungszone 20 hindurch und mündet in die Mischzone 30. Der Zufuhrkanal 31 ist gebildet bzw. ist ummantelt von einem Harzrohr 33. Die Schäumungszone 20 ist gebildet bzw. ist ummantelt von einem Schaumrohr 24. Die Trennwände 23 sind gebildet durch Scheiben, welche eine innere Ausnehmung aufweisen, die der Querschnittsfläche des Harzrohrs 33 entspricht und welche Scheiben einen Radius aufweisen, der kleiner ist als der Innenradius des Schaumrohrs 24. Somit bleibt eine Lücke zum Schaumrohr 24, welche als Öffnung zur Herstellung einer Fluidverbindung dient. Die Trennwände 23' sind gebildet durch Scheiben, welche eine innere Ausnehmung aufweisen, die grösser ist als die Querschnittsfläche des Harzrohrs 33 und welche Scheiben einen Radius aufweisen, der dem Innenradius des Schaumrohrs 24 entspricht. Somit bleibt eine Lücke zum Harzrohr 33, welche als Öffnung zur Herstellung einer Fluidverbindung dient. Bevor der Schaum aus der Schäumungszone 20 in die Mischzone 30 treten kann, muss er ein am Ende der Schäumungszone 20 angeordnetes Sieb 25 passieren. Die Mischzone 30 und die Schäumungszone 20 sind mittels einer Überwurfmutter 40 verbunden. Die Komponente B gelangt, aus dem Harzrohr 33 kommend, über einen Düsenkegel 34 und eine Harzdüse 35 in die, in einem Mischrohr 36 angeordnete Mischbüchse 37. Das in der Mischbüchse 37 gemischte 2-Komponenten-Absorptionsmittel verlässt die Vorrichtung dann über die Auslassöffnung 32.

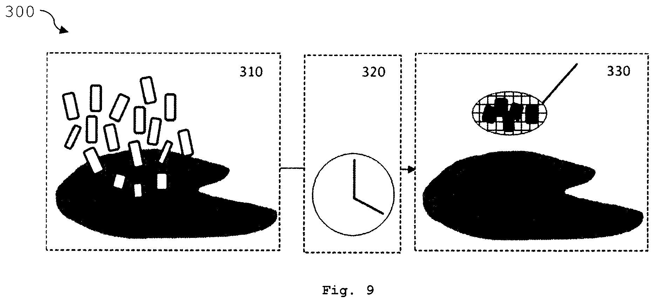

Fig. 9 zeigt ein Verfahren 300 zum Absorbieren einer Flüssigkeit. Zu sehen ist eine Flüssigkeitslache, auf welche in einem ersten Schritt ein Absorptionsmittel, insbesondere in zerkleinerter Form, aufgestreut wird (310). In einem nächsten Schritt wird gewartet (320), bis das Absorptionsmittel gesättigt ist, oder die Flüssigkeit im Wesentlichen vollständig aufgesogen hat. Je nach Beschaffenheit der Flüssigkeit, bspw. je nach deren Viskosität, kann dies beispielsweise unmittelbar nach dem Aufstreuen der Fall sein, oder einige Minuten bis gar Stunden (z.B. zwischen 5 min und 10 h) dauern. Im darauffolgenden Schritt wird das mit der Flüssigkeit evtl. bis zur Sättigung vollgesogene Absorptionsmittel aufgenommen (330), insbesondere durch Abschöpfen oder Einsammeln. Im Anschluss (hier nicht gezeigt) kann das gesättigte Absorptionsmittel verbrannt werden oder die Flüssigkeit kann durch Pressen oder Zentrifugation rückgewonnen werden.

### Bezugszeichenliste

| | |
|---|---|
| 1 | Vorrichtung zur Herstellung eines Absorptionsmittels |
| 10 | Vormischzone |
| 11, 12 | Einlassöffnung |
| 20 | Schäumungszone |
| 21 | Kammer |
| 22 | Partikel |
| 23 | Trennwand |
| 24 | Schaumrohr |
| 25 | Sieb |
| 30 | Mischzone |
| 31 | Zufuhrkanal |
| 32 | Auslassöffnung |
| 33 | Harzrohr |
| 34 | Düsenkegel |
| 35 | Harzdüse |
| 36 | Mischrohr |
| 37 | Mischbüchse |
| 40 | Überwurfmutter |
| 100 | Verfahren zur Herstellung einer Komponente A |
| 101 | Erwärmen |
| 102 | Zugeben Sulfaminsäure und der Sulfonsäure |
| 103 | Mischen |
| 104 | Zugeben von Alkohol |
| 105 | Rühren |
| 106 | Zugeben des Polyethylenglycols |
| 107 | Lösen des Bisphenols |
| 108 | Zugeben des gelösten Bisphenols, des Härters, des Haftvermittlers und der anorganischen Säure |
| 110 | Verfahren zur Herstellung einer Komponente B |
| 111 | Mischen des Lösemittels, des Harnstoff-Formaldehyd-Kondensats, des Alditols und des Diamins |
| 112 | Rühren |
| 113 | Zugeben des Polyvinylpyrrolidons |
| 200 | Verfahren zur Herstellung eines Absorptionsmittels |
| 209 | Verdünnen der Komponente A |
| 210 | Mischen der Komponente A mit einem Gas |
| 211 | Aufschäumen des Gemischs |
| 212 | Mischen des Schaums mit der Komponente B |
| 300 | Verfahren zum Absorbieren einer Flüssigkeit |
| 310 | Aufstreuen eines Absorptionsmittels |
| 320 | Warten |
| 330 | Aufnehmen des vollgesogenen Absorptionsmittels |

## Patentansprüche

1. Komponente A umfassend:
- Lösemittel, insbesondere anorganisches Lösemittel;
- Sulfonsäure;
- Anorganische Säure;
- Sulfaminsäure;
- Härter, insbesondere Arylsulfonsäure;
- Alkohol, insbesondere einwertigen und zweiwertigen Alkohol;
- Haftvermittler;
- Polyethylenglycol;
- Bisphenol.

2. Komponente A nach Anspruch 1 umfassend:
- Wasser als Lösemittel;
- Alkylbenzolsulfonsäure als Sulfonsäure;
- Phosphorsäure als anorganische Säure;
- Sulfaminsäure;
- Xylolsulfonsäure als Härter;
- Hexadecanol und/oder Octadecanol als einwertigen Alkohol;
- Resorcin als Haftvermittler;
- Polyethylenglycol 550 und/oder Polyethylenglycol 1000 als Polyethylenglycol;
- Butandiol, insbesondere 1.4 Butandiol, als zweiwertigen Alkohol;
- Bisphenol A als Bisphenol.

3. Komponente A nach Anspruch 1 oder Anspruch 2 umfassend:
- 40-60%_{Masse} Lösemittel, insbesondere 48.2%_{Masse};
- 20-30%_{Masse} Sulfonsäure 65%ig, insbesondere 26.0%_{Masse};
- 1-12%_{Masse} anorganische Säure 75%ig, insbesondere 8.7%_{Masse};
- 1-6%_{Masse} Sulfaminsäure, insbesondere 3.1%_{Masse};
- 1-5%_{Masse} Härter; insbesondere 2.7%_{Masse};
- 1-5%_{Masse} einwertigen Alkohol, insbesondere 2.6%_{Masse};
- 1-5%_{Masse} Haftvermittler, insbesondere 2.4%_{Masse};
- 2-8%_{Masse} Polyethylenglycol; insbesondere 4.3%_{Masse};
- 0.5-5%_{Masse} zweiwertigen Alkohol, insbesondere 1.9%_{Masse};
- 0.01-1%_{Masse} Bisphenol; insbesondere 0.1%_{Masse}.

4. Komponente B umfassend:
- Lösemittel, insbesondere anorganisches Lösemittel;
- Harnstoff-Formaldehyd-Kondensat;
- Alditol;
- Diamid;
- Polyvinylpyrrolidon.

5. Komponente B nach Anspruch 4 umfassend:
- Wasser als Lösemittel;
- Basopor^{®}293 als Harnstoff-Formaldehyd-Kondensat;
- Sorbitol als Alditol;
- Harnstoff als Diamid;
- Polyvinylpyrrolidon K-90 als Polyvinylpyrrolidon.

6. Komponente B nach Anspruch 4 oder Anspruch 5 umfassend:
- 35-55%_{Masse} Lösemittel, insbesondere 46.6%_{Masse};
- 30-40%_{Masse} Harnstoff-Formaldehyd-Kondensat, insbesondere 34.3%_{Masse};
- 5-15%_{Masse} Alditol 70%ig, insbesondere 11.5%_{Masse};
- 5-10%_{Masse} Diamid, insbesondere 7.35%_{Masse};
- 0.01-3%_{Masse} Polyvinylpyrrolidon, insbesondere 0.25%_{Masse}.

7. Verfahren zur Herstellung (100) einer Komponente A nach einem der Ansprüche 1 bis 3, umfassend die Schritte:
a) Erwärmen des Lösemittels (101);
b) Zugeben der Sulfaminsäure und der Sulfonsäure (102);
c) Mischen (103);
d) Zugeben von Alkohol (104);
e) Rühren (105);
f) Zugeben des Polyethylenglycols (106);
g) Mischen (103);
h) Lösen des Bisphenols (107);
i) Zugeben des gelösten Bisphenols, des Härters, des Haftvermittlers und der anorganischen Säure (108);
j) Mischen (103).

8. Verfahren zur Herstellung (110) einer Komponente B nach einem der Ansprüche 4 bis 6, umfassend die Schritte:
a) Mischen des Lösemittels, des Harnstoff-Formaldehyd-Kondensats, des Alditols und des Diamids (111);
b) Rühren (112);
c) Zugeben des Polyvinylpyrrolidons (113);
d) Rühren (112).

9. Verfahren zur Herstellung (200) eines Absorptionsmittels aus einer Komponente A nach einem der Ansprüche 1 bis 3 und einer Komponente B nach einem der Ansprüche 4 bis 6, umfassend die Schritte:
a) Mischen der Komponente A mit einem Gas zum Erzeugen eines Gemischs (210);
b) Aufschäumen des Gemischs durch abwechslungsweises Verdichten und Entspannen zum Erzeugen eines Schaums (211) ;
c) Mischen des Schaums mit der Komponente B (212) zum Erzeugen eines weiteren Gemischs;
d) Trocknen des weiteren Gemischs.

10. Verfahren (200) nach Anspruch 9, zusätzlich umfassend den Schritt:
e) Verdünnen der Komponente A mit Lösemittel (209); insbesondere im Verhältnis 1:13
vor dem Schritt a).

11. Verfahren (200) nach Anspruch 9 oder Anspruch 10,
wobei
beim Schritt des Mischens der Komponente A mit dem Gas zum Erzeugen eines Gemischs (210) ein Teil der Komponente A eingesetzt wird; und
beim Schritt des Mischens des Schaumes mit der Komponente B (212) 14 bis 42, insbesondere 28 Teile der Komponente B eingesetzt werden.

12. Absorptionsmittel erhalten durch ein Verfahren nach einem der Ansprüche 9 bis 11.

13. Vorrichtung (1) zur Herstellung eines Absorptionsmittels umfassend:
eine Vormischzone (10) mit mindestens zwei Einlassöffnungen (11, 12);
eine an die Vormischzone angrenzende und mit dieser in Fluidverbindung stehende Schäumungszone (20), welche mehreren miteinander in Fluidverbindung stehende und mit mechanischen Partikeln (22) gefüllte Kammern (21) aufweist;
eine an die Schäumungszone angrenzende und mit dieser in Fluidverbindung stehende Mischzone (30), welche in Fluidverbindung steht mit einem Zufuhrkanal (31) und
beabstandet von diesem eine Auslassöffnung (32) aufweist;
**dadurch gekennzeichnet, dass**
die Füllmenge der einzelnen Kammern (21) nicht gleich ist.

14. Vorrichtung (1) nach Anspruch 13, wobei die Füllmenge der einzelnen Kammern (21) von der an die Vormischzone (10) angrenzenden Seite der Schäumungszone (320) zu der an die Mischzone (30) angrenzenden Seite der Schäumungszone (20) steigt.

15. Verwendung des Absorptionsmittels nach Anspruch 12 zum Absorbieren einer Flüssigkeit.

16. Verfahren (300) zum Absorbieren einer Flüssigkeit, umfassend die Schritte:
a) Aufstreuen eines Absorptionsmittels nach Anspruch 12 auf eine Flüssigkeitslache (310), insbesondere in zerkleinerter Form;
b) Warten (320);
c) Aufnehmen des mit der Flüssigkeit vollgesogenen Absorptionsmittels (330), insbesondere durch Abschöpfen oder Einsammeln.

## Claims

1. Component A comprising:
- solvent, in particular inorganic solvent;
- sulfonic acid;
- inorganic acid;
- sulfamic acid;
- hardener, in particular arylsulfonic acid;
- alcohol, in particular monohydric and dihydric alcohol;
- adhesion agent;
- polyethylene glycol;
- bisphenol.

2. Component A according to claim 1 comprising:
- water as solvent;
- alkylbenzene sulfonic acid as sulfonic acid;
- phosphoric acid as inorganic acid;
- sulfamic acid;
- xylene sulfonic acid as hardener;
- hexadecanol and/or octadecanol as monohydric alcohol;
- resorcin as adhesion agent;
- polyethylene glycol 550 and/or polyethylene glycol 1000 as polyethylene glycol;
- butanediol, in particular 1.4 butanediol, as dihydric alcohol;
- bisphenol A as bisphenol.

3. Component A according to claim 1 or claim 2 comprising:
- 40-60%ₘₐₛₛ of solvent, in particular 48.2%ₘₐₛₛ;
- 20-30%ₘₐₛₛ of 65% sulfonic acid, in particular 26.0%ₘₐₛₛ;
- 1-12%ₘₐₛₛ of 75% inorganic acid, in particular 8.7%ₘₐₛₛ;
- 1-6%ₘₐₛₛ of sulfamic acid, in particular 3.1%ₘₐₛₛ;
- 1-5%ₘₐₛₛ of hardener, in particular 2.7%ₘₐₛₛ;
- 1-5%ₘₐₛₛ of monohydric alcohol, in particular 2.62.7%ₘₐₛₛ;
- 1-5%ₘₐₛₛ of adhesion agent, in particular 2.7%ₘₐₛₛ;
- 2-8%ₘₐₛₛ of polyethylene glycol, in particular 4.32.7%ₘₐₛₛ;
- 0.5-5%ₘₐₛₛ of dihydric alcohol, in particular 1.9%ₘₐₛₛ;
- 0.01-1%ₘₐₛₛ of bisphenol, in particular 0.1%ₘₐₛₛ.

4. Component B comprising:
- solvent, in particular inorganic solvent;
- urea-formaldehyde-condensate;
- alditol;
- diamide;
- polyvinyl pyrrolidone.

5. Component B according to claim 4 comprising:
- water as solvent;
- Basopor^{®}293 as urea-formaldehyde-condensate;
- sorbitol as alditol;
- urea as diamide;
- polyvinyl pyrrolidone K-90 as polyvinyl pyrrolidone.

6. Component B according to claim 4 or claim 5 comprising:
- 35-55%ₘₐₛₛ of solvent, in particular 46.62.7%ₘₐₛₛ;
- 30-40%ₘₐₛₛ of urea-formaldehyde-condensate, in particular 34.3%ₘₐₛₛ;
- 5-15%ₘₐₛₛ of 70% alditol, in particular 11.5%ₘₐₛₛ;
- 5-10%ₘₐₛₛ of diamide, in particular 7.35%ₘₐₛₛ;
- 0.01-3%ₘₐₛₛ of polyvinyl pyrrolidone, in particular 0.25%ₘₐₛₛ.

7. Method for producing (100) a component A according to any one of the claims 1 to 3, comprising the steps:
a) warming the solvent (101);
b) adding the sulfamic acid and the sulfonic acid (102);
c) mixing (103);
d) adding alcohol (104);
e) stirring (105);
f) adding polyethylene glycol (106);
g) mixing (103);
h) dissolving bisphenol (107);
i) adding the dissolved bisphenol, the hardener, the adhesion agent and the inorganic acid (108);
j) mixing (103).

8. Method for producing (110) a component B according to one of the claims 4 to 6, comprising the steps:
a) mixing the solvent, the urea-formaldehyde-condensate, the alditol and the diamide (111);
b) stirring (112);
c) adding the polyvinyl pyrrolidone (113);
d) stirring (112).

9. Method for producing (200) an absorption agent from a component A according to any one of the claims 1 to 3 and a component B according to any one of the claims 4 to 6, comprising the steps:
a) mixing the component A with a gas to produce a mixture (210);
b) foaming the mixture by alternately compressing and decompressing to produce a foam (211);
c) mixing the foam with the component B (212) to produce a further mixture;
d) drying the further mixture.

10. Method (200) according to claim 9, additionally comprising the step:
e) diluting the component A with solvent (209); in particular in the ratio 1:13
before step a).

11. Method (200) according to claim 9 or claim 10, wherein
in the step of mixing the component A with the gas to produce a mixture (210) a part of the component A is used; and
in the step of mixing the foam with the component B (212) 14 to 42, in particular 28 parts of the component B are used.

12. Absorption agent obtained by a method according to any one of the claims 9 to 11.

13. Device (1) for producing an absorption agent comprising:
a premixing zone (10) with at least two inlet openings (11,12);
a foaming zone (20) adjacent to the premixing zone and in fluid connection therewith, which has multiple chambers (21) filled with mechanical particles (22) and in fluid connection with each other, a mixing zone (30) adjacent to the foaming zone and in fluid connection therewith, being in fluid connection with a supply channel (31) and having an outlet opening (32) distanced from it,
**characterized in that**
the filling quantity of the individual chambers (21) is not equal.

14. Device (1) according to claim 13, wherein the filling quantity of the individual chambers (21) increases from the side of the foaming zone (320) adjacent to the premixing zone (10) to the side of the foaming zone (20) adjacent to the mixing zone (30).

15. Use of the absorption agent according to claim 12 for absorbing a liquid.

16. Method (300) for absorbing a liquid comprising the steps:
a) scattering an absorption agent according to claim 12 on a puddle of liquid (310), in particular in comminuted form;
b) waiting (320);
c) taking up the absorption agent (330) soaked with the liquid, in particular by skimming or collecting.

## Revendications

1. Composant A comprenant :
- un solvant, en particulier un solvant inorganique ;
- de l'acide sulfonique ;
- de l'acide inorganique ;
- de l'acide sulfamique ;
- un agent durcisseur, en particulier de l'acide arylsulfonique ;
- un alcool, en particulier un monoalcool et un dialcool ;
- un agent de liaison ;
- du polyéthylène glycol ;
- du bisphénol.

2. Composant A selon la revendication 1 comprenant :
- de l'eau comme solvant ;
- de l'acide alkylbenzène sulfonique comme acide sulfonique ;
- de l'acide phosphorique comme acide inorganique ;
- de l'acide sulfamique ;
- de l'acide xylène sulfonique comme agent durcisseur ;
- de l'hexadécanol et/ou de l'octadécanol comme monoalcool ;
- du résorcinol comme agent de liaison ;
- du polyéthylène glycol 550 et/ou du polyéthylène glycol 1000 comme polyéthylène glycol ;
- du butanediol, en particulier du 1,4-butanediol, comme dialcool ;
- du bisphénol A comme bisphénol.

3. Composant A selon la revendication 1 ou 2, comprenant :
- de 40 à 60 % en masse, en particulier 48,2 % en masse, de solvant ;
- de 20 à 30 % en masse, en particulier 26,0 % en masse, d'acide sulfonique à 65 % ;
- de 1 à 12 % en masse, en particulier 8,7 % en masse, d'acide inorganique à 75 % ;
- de 1 à 6 % en masse, en particulier 3,1 % en masse, d'acide sulfamique ;
- de 1 à 5 % en masse, en particulier 2,7 % en masse, d'agent durcisseur ;
- de 1 à 5 % en masse, en particulier 2,6 % en masse, de monoalcool ;
- de 1 à 5 % en masse, en particulier 2,4 % en masse, d'agent de liaison ;
- de 2 à 8 % en masse, en particulier 4,3 % en masse, de polyéthylène glycol ;
- de 0,5 à 5 % en masse, en particulier 1,9 % en masse, de dialcool ;
- de 0,01 à 1 % en masse, en particulier 0,1 % en masse, de bisphénol.

4. Composant B comprenant :
- un solvant, en particulier un solvant inorganique ;
- un condensat d'urée-formaldéhyde ;
- de l'alditol ;
- du diamide ;
- de la polyvinylpyrrolidone.

5. Composant B selon la revendication 4 comprenant :
- de l'eau comme solvant ;
- du Basopor^{®}293 comme condensat d'urée-formaldéhyde ;
- du sorbitol comme alditol ;
- de l'urée comme diamide ;
- de la polyvinylpyrrolidone K-90 comme polyvinylpyrrolidone.

6. Composant B selon la revendication 4 ou 5 comprenant :
- de 35 à 55 % en masse, en particulier 46,6 % en masse, de solvant ;
- de 30 à 40 % en masse, en particulier 34,3 % en masse, de condensat d'urée-formaldéhyde ;
- de 5 à 15 % en masse, en particulier 11,5 % en masse, d'alditol à 70 %.
- de 5 à 10 % en masse, en particulier 7,35 % en masse, de diamide ;
- de 0,01 à 3 % en masse, en particulier 0,25 % en masse, de polyvinylpyrrolidone.

7. Procédé pour fabriquer (100) un composant A selon l'une des revendications 1 à 3, comprenant les étapes consistant à :
a) chauffer le solvant (101) ;
b) ajouter l'acide sulfamique et l'acide sulfonique (102) ;
c) mélanger (103) ;
d) ajouter l'alcool (104) ;
e) agiter (105) ;
f) ajouter le polyéthylène glycol (106) ;
g) mélanger (103) ;
h) dissoudre le bisphénol (107) ;
i) ajouter le bisphénol dissous, l'agent durcisseur, l'agent de liaison et l'acide inorganique (108) ;
j) mélanger (103).

8. Procédé pour fabriquer (110) un composant B selon l'une des revendications 4 à 6, comprenant les étapes consistant à :
a) mélanger le solvant, le condensat d'urée-formaldéhyde, l'alditol et le diamide (111) ;
b) agiter (112) ;
c) ajouter la polyvinylpyrrolidone (113) ;
d) agiter (112).

9. Procédé pour fabriquer (200) un agent absorbant à partir d'un composant A selon l'une des revendications 1 à 3, et d'un composant B selon l'une des revendications 4 à 6, comprenant les étapes consistant à :
a) mélanger le composant A avec un gaz pour produire un mélange (210) ;
b) faire mousser le mélange en alternant des phases de compression et de détente pour produire une mousse (211) ;
c) mélanger la mousse avec le composant B (212) pour produire un autre mélange ;
d) faire sécher l'autre mélange.

10. Procédé (200) selon la revendication 9, comprenant en outre l'étape consistant à :
e) diluer le composant A avec du solvant (209) ; en particulier dans un rapport de 1:13 avant l'étape a).

11. Procédé (200) selon la revendication 9 ou 10, dans lequel lors de l'étape consistant à mélanger le composant A avec le gaz en vue de produire un mélange (210), on utilise une partie du composant A ; et
lors de l'étape consistant à mélanger la mousse avec le composant B (212), on utilise 14 à 42, en particulier 28 parties du composant B.

12. Moyen d'absorption obtenu par le procédé selon l'une des revendications 9 à 11.

13. Dispositif (1) pour produire un moyen d'absorption comprenant :
une zone de prémélange (10) avec au moins deux ouvertures d'entrée (11, 12) ;
une zone de moussage (20) adjacente à la zone de prémélange et en liaison fluidique avec cette dernière, présentant plusieurs chambres (21) remplies de particules mécaniques (22) en liaison fluidique entre elles,
une zone de mélange (30) adjacente à la zone de moussage et en communication fluidique avec cette dernière, cette zone étant en communication fluidique avec un canal d'alimentation (31) et présentant une ouverture de sortie (32) espacée de ce dernier ;
**caractérisé en ce que** la quantité de remplissage des différentes chambres (21) n'est pas identique.

14. Dispositif (1) selon la revendication 13, dans lequel la quantité de remplissage des différentes chambres (21) augmente depuis le côté de la zone de moussage (20) adjacent à la zone de prémélange (10) vers le côté de la zone de moussage (20) adjacent à la zone de mélange (30).

15. Utilisation du moyen d'absorption selon la revendication 12 pour absorber un liquide.

16. Procédé (300) pour absorber un liquide, comprenant les étapes consistant à :
a) disperser un moyen d'absorption selon la revendication 12 sur une nappe de liquide (310), en particulier sous forme broyée ;
b) attendre (320) ;
c) récupérer le moyen d'absorption (330) imbibé de liquide, en particulier par écrémage ou prélèvement.
